Europäisches Patentamt

European Patent Office

Office européen des brevets

(19)

(11) Publication number: **0 069 575**
A2

# (12) EUROPEAN PATENT APPLICATION

(21) Application number: 82303519.1

(22) Date of filing: 05.07.82

(51) Int. Cl.³: **F 41 G 1/00**
G 02 B 27/32, G 02 B 23/10

(30) Priority: 07.07.81 GB 8120944

(43) Date of publication of application:
12.01.83 Bulletin 83/2

(84) Designated Contracting States:
AT BE CH DE FR IT LI LU NL SE

(71) Applicant: RING SIGHTS LIMITED
Woodyers Wonersh
Guildford Surrey, GU5 0PB(GB)

(72) Inventor: Budden, Raymond George
7 Southbrook Road
Langstone Havant Hampshire P09 1RL(GB)

(72) Inventor: Scott, Fraser
Woodyers Wonersh
Guildford Surrey(GB)

(74) Representative: Cross, Rupert Edward Blount et al,
BOULT, WADE & TENNANT 27 Furnival Street
London EC4A 1PQ(GB)

(54) Improved collimator gun sight.

(57) A collimator gun sight has a partially reflecting concave mirror (16) focusing an image at infinity of an aiming mark (19) superimposed on the target field. The aiming mark is a composite pattern having a reflective part and a transmissive part. Ambient light (23) illuminates one part and artificial light (22) the other providing a sight suitable for day and night use.

FIG 1.

EP 0 069 575 A2

Croydon Printing Company Ltd.

# IMPROVED COLLIMATOR GUN SIGHT

The present invention relates to collimator gun sights. With such collimator sights, light from a suitably illuminated graticule pattern or other aiming mark is collimated for presentation to an eye of the user of the weapon as am image of the aiming mark at infinity, or at a predetermined distance where appropriate. In one known arrangement, a partially-reflecting concave mirror is suitably placed to reflect back to the aiming eye of the user of the weapon light from means defining the graticule pattern. If the distance between the concave mirror and the graticule pattern corresponds to the focal length of the concave mirror, the image seen in the concave mirror will appear to be substantially at infinity. The user of the weapon can then view the target field through the partially-reflecting mirror whilst simultaneously seeing the image of the graticule pattern at infinity in the mirror. It is usual to ensure that the partially-reflecting mirror provides substantially no deflection to light passing through the mirror from the target field so as to minimise any distortion of the target as seen by the user.

It is known to form a collimator sight of this kind as a block or rod of optically transparent material with the partially-reflecting mirror formed at one of the rod. The means defining the graticule pattern may be embedded in or affixed to a surface of the rod so that the light path from the graticule pattern to the partially-reflecting surface is entirely within the material of the rod. An example of this type of sight is disclosed in the specification of U.K. Patent Application No. 8015977 (Serial No.2056634).

In the prior art, various techniques are known for illuminating the graticule pattern with ambient light, so that the brightness of the image of the aiming mark as seen by the user of the weapon is adjusted automatically to the ambient light level, and in particular to the brightness of the target field. However, for night-time use, it is necessary to provide artificial illumination of the graticule pattern. It is known to provide electric illumination, but this has the disadvantage of requiring batteries which have to be replaced from time to time and are bulky, and also requiring the user of the weapon to switch the illumination on and off as required. It is also known to have a detachable illumination source which is fitted to the sight to replace ambient light when the weapon is to be used at night.

According to the present invention, a collimator gun sight has means defining a partially reflecting transparent concave surface; means defining a graticule pattern substantially on the focal plane of the concave surface whereby a virtual image of the graticule pattern, forming an aiming mark, can be seen reflected in the concave surface superimposed on the target viewed along a line of sight through the surface, said graticule pattern defining means defining a composite pattern having a reflective part to reflect light towards said concave surface and a transmissive part; means for directing ambient light from the target field to illuminate one said part of the graticule pattern from one side thereof; and a source of artificial light located to direct artificial light to illuminate the other said part of the graticule pattern from the other side thereof. With this arrangement, a sight can be provided which can be used both during the day and at night, without the need to make any special alterations or adjustments to the sight. Because the artificial light source is located to direct artificial light from the opposite side of the graticule pattern to ambient light, the artificial light source can be permanently positioned without tending to obscure the ambient light. Furthermore, different parts of the graticule pattern are illuminated by ambient light and by artificial light which can be advantageous allowing, for example, an open T pattern for night use, and a spot and ring for daytime use.

Said one said part of the graticule pattern may be the reflective part and said other said part the transmissive part. Alternatively, said one said part may be the transmissive part and said other said part the reflective part.

In an example of either case, the gun sight comprises an elongate block of solid transparent material of substantially uniform refractive index formed with an opposed pair of plane parallel outer end faces, the line of sight extending through said end faces so that the target can be viewed along the line of sight substantially undeviated; the block having, within its body, said means defining a partially reflective transparent concave surface adjacent a distal one of said end faces. Then, in the case where said one said part of the graticule pattern is the reflective part, said graticule pattern defining means may be located adjacent a proximal one of said end faces and off the line of sight, the concave surface having its optical centre on the line of sight and being symmetrical about its optical axis which is at an angle to the line of sight. Said means for directing ambient light may then comprise a window adjacent said distal end face arranged to admit ambient light from the target field into the block to illuminate the reflective part of the graticule pattern. The reflective surface or surfaces of the reflective part of the graticule pattern are preferably angled to provide specular reflection of ambient light from said window towards said concave surface.

This arrangement maximises the use of the available light providing a brighter aiming mark image.

The source of artificial light may be located at said proximal end face on the side of the graticule pattern opposite to said window, whereby artificial light from said source can shine through said transmissive part of the pattern towards the concave surface.

In the case where said one said part of the graticule pattern is the transmissive part, said graticule pattern defining means may be located adjacent said distal end face, whereby ambient light from the target field can pass through the transmissive part of the graticule pattern and along the block, and said block may have plane mirror means to reflect light from the graticule pattern defining means into said concave surface. Conveniently, said mirror means is formed by an outer surface portion of the block adjacent a proximal one of said pair of end faces and off the line of sight. The concave surface may have its optical centre on the line of sight and may be symmetrical about its optical axis which may be at an angle to the line of sight and parallel to the normal to said outer surface portion.

In this arrangement, said source of artificial light may be located on the same side of the graticule pattern as said mirror means but off the direct path between them so as not to obscure the image of the graticule pattern, whereby whereby artificial light from the source can be reflected by the reflective part of the graticule pattern towards said mirror means. Then the reflective surface or surfaces of the reflective part of the graticule pattern are preferably angled to provide specular reflection of artificial light from the said source towards said mirror means and thence into the concave surface.

Also with this arrangement, the block preferably has a prismatic extension adjacent the distal end face to provide a surface suitably angled and located relative to the graticule pattern to allow light from said source to enter the block to illuminate the reflective part of the graticule pattern. It will be appreciated that if the source of artificial light is spaced in a gas or vacuum from the outer surface of the block of transparent material, then there is a maximum angle relative to the normal at the surface of the block at which light from the source can enter the block. This maximum angle corresponds to grazing incidence of the light on the exterior surface of the block. The prismatic extension ensures that light from the source can enter the block in order to illuminate the graticule pattern.

In preferred embodiments of the invention, the artificial light source is a radio-active light source encapsulated in an envelope of transparent material. In some examples of such light sources, typically employing tritium as the radio-active material, the radio-active light emitting phosphor, although attached to the inner surface of the envelope, is not in optical contact with it. If the envelope is then cemented directly to an outer surface of the transparent block of the sight, light can enter the block from the source only at angles less than a predetermined maximum from the normal to the surface of the block. For typical glass materials, this maximum angle of entry is about $41^{\circ}$ to the normal. Accordingly, the prismatic extension for the block as mentioned above, is arranged to ensure that the direct line from the artificial light source to the graticule pattern to be illuminated is at less than the maximum angle (e.g. $41^{\circ}$) from the normal to the surface of the block at the point of entry of the artificial light.

Where the artificial light source comprises an extended light emitting surface capable of acting as a diffusely reflecting surface, the sight may include means for directing ambient light from the sky to illuminate said light emitting surface to provide enhanced illumination of said other said part of the graticule pattern for use in conditions of high ambient light level but relatively low target field illumination.

Examples of the present invention will now be described with reference to the accompanying drawings in which:

FIGURE 1 is a schematic representation of an embodiment of the invention in which a reflective part of the graticule is illuminated by ambient light and a transmissive part by artificial light;

FIGURE 2 shows an alternative embodiment in which ambient light illuminates the transmissive part of the graticule and the reflective part is illuminated by artificial light;

FIGURE 3 shows an alternative arrangement for the embodiment of FIGURE 2; and

FIGURE 4 illustrates a typical composite graticule pattern which may be used in the described embodiments.

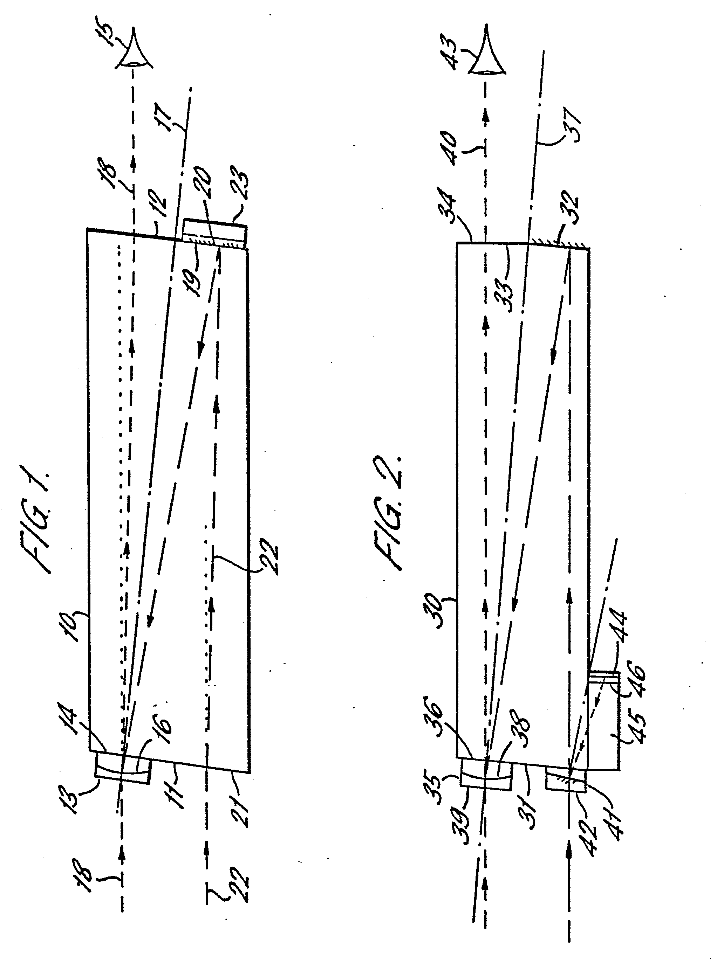

Referring to FIGURE 1, a collimator gun sight is formed of a solid elongate block 10 of transparent material, typically glass. The block 10 has a rectangular cross-section and has plane end faces 11 and 12. The faces 11 and 12 are parallel to one another and at a small angle to the plane perpendicular to the longitudinal axis of the block 10.

A planar doublet glass 13 is cemented to an upper part 14 of the end face 11. The face 11 is the distal one of the two faces 11 and 12 relative to the eye 15 of a user of the sight. The planar doublet glass 13 comprises a planar concave lens and a planar convex lens cemented together with a partially-reflective coating between them, thereby forming a partially-reflecting concave surface 16. The doublet 13 is cemented to the upper part 14 of the face 11 with the concave surface 16 directed into the block 10. The concave surface 13 is symmetrical about its optical axis 17 which passes through the optical centre of the surface. The optical axis 17 is perpendicular to the plane faces of the doublet 13, and is thus also perpendicular to the end faces 11 and 12 of the block 10.

It will be appreciated that the outer plane face of the doublet 13 is parallel to the proximal end face 12 of the block 10, so that a target can be viewed through the partially-reflecting surface 16 from the eye 15 substantially undeviated along a line of sight 18 which is parallel to the longitudinal axis of the block 10. The line of sight 18 is displaced slightly downwards in FIGURE 1 by passage through the doublet 13 and block 10 in view of the angle of the end faces to the line of sight.

A graticule pattern 19 is formed on a lower part 20 of the proximal end face 12 of the block 10. The graticule pattern 19 is formed of two parts, a reflective part which reflects incident light back into the block 10, and a transmissive part. The reflective part is illuminated by ambient light from the target field which enters the block 10 through a window 21 at a lower part of the distal end face 11 of the block, and travels the length of the block to be incident on the reflective part of the graticule 19 as illustrated in FIGURE 1 by the ray line 22. The reflective part of the graticule pattern 19 is formed as a reflective coating which is coplanar or parallel to the plane of the proximal end face 12 of the block 10. The angle of the end faces 11 and 12 to the axis of the block 10 is selected so that the reflective part of the graticule pattern 19 provides specular reflection of ambient light entering the block through the window 21 back towards the concave partially-reflecting surface 16 of the doublet 13. The radius of curvature of the partially-reflecting concave surface 16 is selected to be twice the distance between the optical centre of the surface 16 and the graticule pattern 19, so that a virtual image at infinity of the graticule pattern 19 can be seen reflected in the concave surface 16 superimposed on the target when viewed along the line of sight 18, for example from the eye 15.

An artificial light source 23 is mounted on the proximal end face 12 of the block 10 on the outside of the graticule pattern 19, i.e. on the opposite side of the pattern to the window 21. Artificial light from the source 23 can shine through the transmissive part of the pattern 19 into the concave surface 16, thereby providing an artificially-illuminated aiming mark for use in conditions of low ambient light.

The artificial light source 23 is permanently fixed to the block 10 and is preferably a radio-active light source, for example, of the kind employing a tritium phosphor.

In use, the sight comprising the block 10 is mounted on a weapon by mounting means enabling the sight to be adjusted for windage and elevation. The block 10 is mounted in a tube having a non-reflective interior surface and providing specular windows into the block 10 only at the upper part of the proximal end face 12, at the exterior face of the doublet 13 and at the lower part of the distal end face 11 corresponding to the window 21.

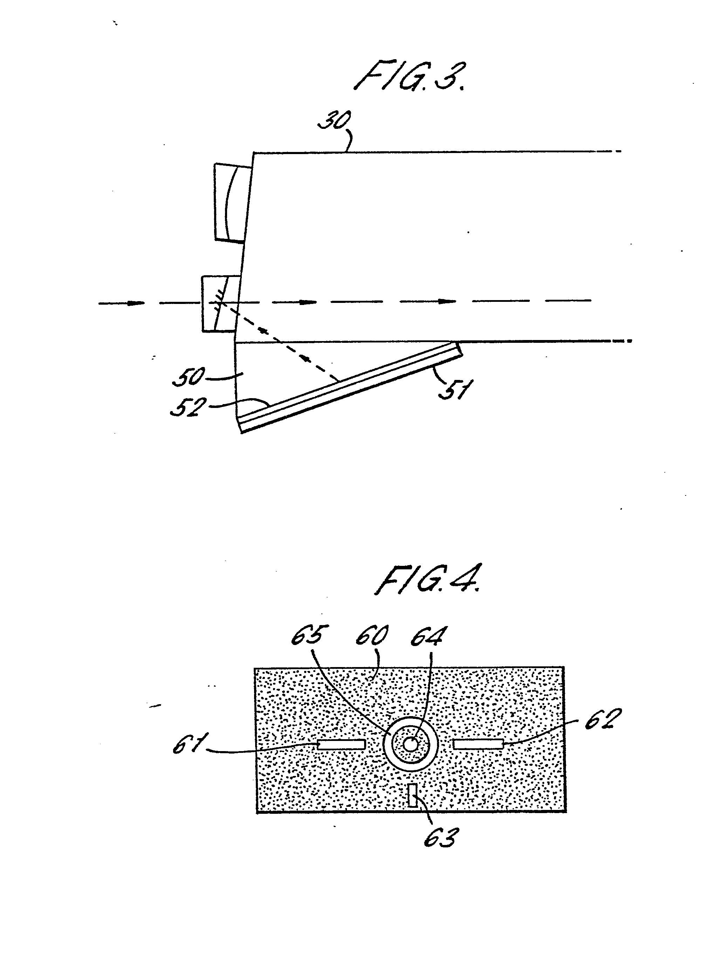

Referring now to FIGURE 2, an alternative form of sigh· is illustrated. The site again comprises an elongate block 30 of transparent material typically glass. A distal end face 31 of the block 30 is again angled relative to the longitudinal axis of the block. A lower part 32 of the proximal end face 33 is correspondingly angled to be parallel to the face 31. However, an upper part 34 of the proximal end face 33 is perpendicular to the longitudinal axis of the block 30 A doublet 35 corresponding to the doublet 13 of FIGURE 1 is again cemented to an upper part 36 of the distal end face 31 so that the optical axis 37 of the partially-reflecting concave surface 38 is normal to the face 31 and the lower part 32 of the face 33. However, the outer face 39 of the doublet 35 is machined to be accurately parallel to the upper part 34 of the proximal end face 33, and therefore is also normal to the longitudinal axis of the block. It will be appreciated therefore that a target can be viewed undeviated through the doublet 35 and the upper part 34 of the proximal end face 33 along a line of sight 40 parallel to the axis of the block 30.

A graticule wedge 41 is cemented to a lower part of the distal end face 31 of the block 30. The wedge 41 defines a composite graticule pattern having a transmissive part and a reflective part. An outer face 42 of the wedge 41 provides a window which is machined to be parallel to the upper part 34 of the proximal end face 33 and thus also normal to the line of sight 40. Accordingly, ambient light from the target field entering through the window 42 can illuminate the transmissive part of the graticule pattern. Light from the illuminated transmissive part of the pattern passes along the length of the block 30 towards the inclined lower part 32 of the proximal end 33 of the block. The part 32 is rendered specularly reflective by a suitable reflective coating so that the light from the graticule pattern is reflected back along the block 30 into the concave surface 38. The radius of curvature of the concave surface 38 is made twice the optical path length from the optical centre of the surface 38 to the transmissive part of the graticule pattern. Further, the inclination of the distal end face 31 and of the reflective lower part 32 of the proximal end face 33 is selected so that a virtual image of the graticule pattern can be seen at infinity superimposed on the target when viewed along the line of sight 40, e.g. by an eye 43.

The reflective part of the graticule pattern formed by the wedge 41 is illuminated from the same side as the mirror 32 by an artificial light source 44. The artificial light source 44 is positioned clear of the direct path between the graticule pattern and the mirror 32 so as not to obscure the pattern. The source 44 is cemented to one end of a prismatic extension 45 which is in turn cemented to a longitudinal face of the block 30 immediately adjacent the distal end 31. As shown in FIGURE 2, the source 44 is cemented to a surface 46 of the extension 45 which is substantially perpendicular to the longitudinal axis of the block 30. The geometry of the extension 45 is selected so that light from the source 44 can enter the extension 45 and thence the rest of the block 30 to illuminate the graticule pattern at an angle relative to the normal to the surface 46 which is less than that corresponding to grazing incidence. In a typical example, where the material of the extension 45 and block 30 is glass, the maximum angle to the normal of light entering the extension 45 is about 41°.

The reflective surface or surfaces of the reflective part of the graticule pattern are angled relative to the longitudinal axis of the block 30 so as to provide specular reflection of light from the artificial source 44 back along the axis of the block 30 towards the mirror 32, and thence into the concave surface 38.

The FIGURE 2 embodiment of this invention provides the same advantages as the FIGURE 1 emodiment. However, the FIGURE 2 embodiment enables the overall length of the sight to be somewhat less in view of the double path length between the graticule pattern and the concave surface 38. Also, the transverse dimension of the block 30 can be somewhat less than that of the FIGURE 1 embodiment since there is substantially no lateral displacement of the line of sight on viewing along the length of the block. However, the FIGURE 2 embodiment may be somewhat more difficult and expensive to manufacture.

FIGURE 3 shows a modified version of the FIGURE 2 embodiment. Parts illustrated in FIGURE 3 which correspond to like parts in FIGURE 2 are given the same reference numbers.

In FIGURE 3, instead of the rectangular form prismatic extension 45 of FIGURE 2, there is provided a triangular form extension 50. An artificial light source 51 is cemented to a face 52 of the extension 50 which is at an acute angle to the axis of the block 30. The angle of the face 52 is selected so that light from the source 51 can enter the extension 50 and thence the rest of the block 30 through the face 52 at an angle to the normal which is less than that corresponding to grazing incidence, typically less than $41^{\circ}$. The FIGURE 3 arrangement is particularly suited to use with artificial sources 51 which are somewhat larger than the source 44 shown in FIGURE 2. For such large sources 51 the FIGURE 3 arrangement provides a more compact structure.

In each of the arrangements of FIGURE 2 and FIGURE 3, the artificial light sources 44 and 51 are preferably radio-active sources, typically those employing a tritium phosphor. In such sources the phosphor is commonly enclosed in a glass envelope and is sometimes optically spaced from or not in optical contact with the internal glass surface of the envelope. It will be appreciated, therefore, that light can be emitted from the envelope 51 into a glass body cemented to it only at angles to the normal less than that corresponding to grazing incidence.

FIGURE 4 illustrates a typical form of composite graticule pattern for use in the various embodiments of this invention. The pattern is formed on an opaque background 60 and comprises a so-called "open T", formed of the line components 61, 62 and 63, and a spot and ring 64 and 65 respectively. The spot and ring 64 and 65 is convenient for daytime use when the target is well illuminated by ambient light. On the other hand, the "open T" is conveniently used at night-time when it is desirable to leave the centre of the target field unobscured by graticule pattern.

Accordingly, in the FIGURE 1 embodiment, the spot and ring 64 and 65 are formed of a specularly reflective material, such as an aluminium coating, whereas the "open T" is formed by a clear, i.e. transmissive, pattern in the opaque background 60.

On the other hand, for the FIGURES 2 and 3 embodiments, the spot and ring 64 and 65 are made clear and transmissive whereas the open T pattern is specularly reflective.

There are occasions where, although the level of the ambient light is high, the light level at the target and the area closely surrounding it is relatively low as for instance when the target is in the shadow of dense trees and amid poorly illuminated undergrowth. In these conditions the part of the graticule pattern being directly illuminated by ambient light from the area at and surrounding the target may be poorly illuminated at a level comparable to the target illumination, whilst the aimer's eyes are adapted to the bright ambient light so the directly illuminated part of the pattern can be difficult to see. Although these levels are relatively low they are far above the level of illumination provided by the radio-active light source on the other part of the pattern and so the other part may not normally be visible. However, if light is allowed to reach the radio-active light source to illuminate the phosphor, this behaves as a diffusing reflector. The light from this reflector then illuminates the part of the graticule normally lit by the artificial source and so provides an enhanced image which will be useful in the conditions of poor direct light outlined above. It is desirable for the phosphor of the radio-active light source to be illuminated by ambient light from the sky.

Referring now to the embodiments illustrated in Figures 1, 2 and 3, in Figure 1 the existing window 21 allows light to enter for the purpose of illuminating the reflective graticule, but such light also passes through the transmissive part of the pattern 19 and illuminates that part of the phosphor of the source 23 directly behind it, so providing additional light to this pattern in daylight conditions. Further light from the sky may be direct to illuminate the phosphor by a prism (not shown) mounted on the upper longitudinal face of the block 10.

In Figure 2, the front end face of the prismatic extension 45 may be left clear and unimpeded by any part of the mounting. Then light will enter and illuminate the phosphor of the betalight to give the desired effect.

In Figure 3, if the forward end of the top surface of the block 30 is left clear say for about 8 mm and a corresponding hole made in the top of the sight mounting then light from the sky will enter in a downward direction and illuminate the phosphor in the betalight 51 and so provide the required diffuse illumination.

In all cases, using a radio-active source in which the phosphor is not in optical contact with the glass envelope, it is important to ensure that the ambient light to illuminate the phosphor is incident at an angle within that corresponding to grazing incidence to ensure the light is not totally internally reflected at the inner surface of the envelope.

CLAIMS:

1.    A collimator gun sight having means defining
a partially reflective transparent concave surface (16:38),
means defining a graticule pattern (19:41) substantially
on the focal plane of the concave surface whereby a
virtual image of the graticule pattern, forming an aiming
mark, can be seen reflected in the concave surface superimposed on the target viewed along a line of sight (18:40)
through the surface, characterised in that said graticule
pattern defining means defines a composite pattern having
a reflective part (64,65) to reflect light towards said
concave surface and a transmissive part (61,62,63);   means
for directing ambient light (21:42) from the target field
to illuminate one said part of the graticule pattern from
one side thereof;   and a source of artificial light (23:44)
located to direct artificial light to illuminate the other
said part of the graticule pattern from the other side
thereof.

2.    A gun sight as claimed in Claim 1, wherein
said one said part is the reflective part and said other
said part is the transmissive part.

3. A gun sight as claimed in Claim 1, wherein said one said part is the transmissive part and said other said part is the reflective part.

4. A gun sight as claimed in Claim 2 or Claim 3, and comprising an elongate block (10:30) of solid transparent material of substantially uniform refractive index formed with an opposed pair of plane parallel outer end faces so that the target can be viewed along the line of sight substantially undeviated; the block having, within its body, said means defining a partially reflective transparent concave surface adjacent a distal one of said end faces.

5. A gun sight as claimed in Claim 4, as dependent on Claim 2, wherein said graticule pattern defining means (19) is located adjacent a proximal one (12) of said end faces and off the line of sight (18), the concave surface (16) having its optical centre on the line of sight and being symmetrical about its optical axis (17) which is at an angle to the line of sight.

6. A gun sight as claimed in Claim 5, wherein said means for directing ambient light comprises a window (21) adjacent said distal end face arranged to admit ambient light from the target field into the block to illuminate the reflective part of the graticule pattern.

7.     A gun sight as claimed in Claim 6, wherein the reflective surface or surfaces of the reflective part of the graticule pattern are angled to provide specular reflection of ambient light from said window towards said concave surface.

8.     A gun sight as claimed in any of Claims 5 to 7 wherein said source (23) of artificial light is located at said proximal end face on the side of the graticule pattern opposite to said window, whereby artificial light from said source can shine through said transmissive part of the pattern towards the concave surface.

9.     A gun sight as claimed in Claim 4 as dependent on Claim 3, wherein said graticule pattern defining means (41) is located adjacent said distal end face (39), whereby ambient light from the target field can pass through the transmissive part of the graticule pattern and along the block, and said block has plane mirror means (32) to reflect light from the graticule pattern defining means into said concave surface.

10.     A gun sight as claimed in Claim 9, wherein said mirror means (32) is formed by an outer surface portion of the block adjacent a proximal one (34) of said pair of end faces and off the line of sight.

11. A gun sight as claimed in Claim 10, wherein the concave surface has its optical centre on the line of sight and is symmetrical about its optical axis (37) which is at an angle to the line of sight and parallel to the normal to said outer surface portion.

12. A gun sight as claimed in any of Claims 9 to 11, wherein said source (44) of artificial light is located on the same side of the graticule pattern as said mirror means but off the direct path between them so as not to obscure the image of the graticule pattern, whereby artificial light from the source can be reflected by the reflective part of the graticule pattern towards said mirror means.

13. A gun sight as claimed in Claim 12, wherein the reflective surface or surfaces of the reflective part of the graticule pattern are angled to provide specular reflection of artificial light from said source towards said mirror means and thence into the concave surface.

14. A gun sight as claimed in Claim 13, wherein the block has a prismatic extension (50) adjacent the distal end face to provide a surface suitably angled and located relative to the graticule pattern to allow light from said source (51) to enter the block to illuminate the reflective part of the graticule pattern.

15.    A gun sight as claimed in any preceding claim wherein the artificial light source is a radio-active light source encapsulated in an envelope of transparent material.

16.    A gun sight as claimed in any preceding claim wherein the artificial light source comprises an extended light emitting surface capable of acting as a diffusely reflecting surface and the sight includes means for directing ambient light from the sky to illuminate said light emitting surface to provide enhanced illumination of said other said part of the graticule pattern for use in conditions of high ambient light level but relatively low target field illumination.

IMR/REC/meb/jh/ EA 636

FIG. 1.

FIG. 2.

0069575

2/2

FIG.3.

30

50

52

51

FIG.4.

65  60  64

61

62

63